# EUROPEAN PATENT APPLICATION

(11) **EP 2 375 065 A1**
(43) Date of publication of application: **12.10.2011**
(21) Application number: 09837524.9
(22) Date of filing: 07.09.2009
(51) Int. Cl.: F03D 11/00

(54) **WIND DRIVEN GENERATOR**

(30) Priority: 07.01.2009 JP 2009001468
(71) Applicant: Mitsubishi Heavy Industries, Ltd., Tokyo 108-8215 (JP)
(72) Inventor: HIRAI, Shigeto, Nagasaki-shi Nagasaki 851-0392 (JP); SATO, Shinsuke, Nagasaki-shi Nagasaki 851-0392 (JP); MATSUO, Takeshi, Nagasaki-shi Nagasaki 851-0392 (JP); OKANO, Yasushi, Nagasaki-shi Nagasaki 850-8610 (JP)
(74) Representative: Intès, Didier Gérard André
(86) International application number: PCT/JP2009/065579
(87) International publication number: WO 2010/079638

(57) **Abstract**

To provide a wind turbine generator capable of creating an air flow which can efficiently circulate air between the interior of a cover and a nacelle so that the interior of the cover can be efficiently cooled down. A wind turbine generator (1) is provided with a rotor head (4) to which wind turbine blades (6) are attached, a cover (5) which covers the rotor head (4), and a nacelle (3) which accommodates a power generating facility (7) connected to the rotor head (4), and has an air circulation between the interior of the cover (5) and the interior of the nacelle (3), wherein an air flow creation device (20) which creates an air flow is provided inside the cover (5).

## Description

### {Technical Field}

The present invention relates to a wind turbine generator that generates electricity with use of a wind turbine that converts natural wind energy to rotational power.

### {Background Art}

A known wind turbine generator in the related art generates electricity using wind power, which is a natural energy. This type of wind turbine generator is configured such that a nacelle mounted on a tower is provided with a rotor head equipped with wind turbine blades, a main shaft connected to the rotor head so as to rotate together with the rotor head in a unified manner, a gear box connected to the main shaft that rotates by receiving wind power with the wind turbine blades, and a generator driven by the shaft output power of the gear box. The rotor head is covered with a cover and thus is protected from rainwater and such matters.
In the thus-configured wind turbine generator, the rotor head equipped with the wind turbine blades that convert wind power to rotational power and the main shaft rotate to generate shaft output power. Then, the shaft output power, the rotational speed of which is accelerated via the gear box connected to the main shaft, is transmitted to the generator. Thus, power generation can be conducted using the shaft output power obtained by converting wind power to rotational power as a driving source for the generator, in other words, using wind power as motive power for the generator.

The nacelle accommodates devices that generate heat during the operation, such as a gear box and a generator. Therefore, there are employed various kinds of cooling structures, such as a cooling structure in which an air inlet port and an air exhaust port are formed so that the interior of the nacelle can be ventilated with a fan and thereby the temperature increase can be avoided.
Moreover, the rotor head accommodates devices such as a pitch control unit that quickly and accurately changes the blade pitch of the wind turbine blades in response to fluctuations in the wind speed.
The pitch control unit is a device that involves heat generation because it comprises, for example, driving devices such as a hydraulic pump driven by an electric motor, and control devices such as a control panel which controls the pitch. In order to ensure the reliability of these devices, a consideration needs to be taken to cool them down.

So far, the space inside the cover is cooled down by creating a spontaneous convection of air between the interior of the nacelle and the interior of the cover.
In addition, for example, as shown in Patent Document 1, a structure has been proposed in which a heat sink comprising a large number of pins extending from a cover that encloses heat generating electronic components accommodated in the rotor head, is provided, and an air flow is given to this heat sink by a fan which rotates along with the rotation of a hub to thereby cool down these components.

### {Citation List}

### {Patent Literature}

{PTL 1}
   US Patent No. 7235895

### {Summary of Invention}

### {Technical Problem}

Incidentally, to deal with a recent increase of the output power, wind turbine generators tend to have larger wind turbine blades. Therefore, it becomes necessary to increase the output power of devices accommodated inside the rotor head. As a result, with the increase of the output power, the amount of heat generated from the devices also increases.
Because of such an increase of the amount of generated heat, the temperature inside the rotor head rises up, which makes a severe condition for control devices including electrical/electronic components that should be installed in an controlled temperature environment.
Since the front area inside the cover is an endorsed space, it is difficult to circulate the air therein.
For this reason, with such a conventional way in which a spontaneous air circulation is created by communicating between the interior of the nacelle and the interior of the cover, most of air whose temperature has been raised by the heat generation inside the rotor head stays in a retained state as it is. So, it is impossible to cool it down to a sufficient level.
Also, in the method shown in Patent Document 1, the amount of heat radiated by the heat sink is still retained inside the rotor head. Thus, the heat radiating efficiency is worsened when this heat is accumulated. So, it is impossible to cool it down to a sufficient level.

With the consideration of such situations, it is an object of the present invention to provide a wind turbine generator capable of creating an air flow which can efficiently circulate air between the interior of a cover and a nacelle so that the interior of the cover can be efficiently cooled down.

### {Solution to Problem}

The present invention adopts the following solutions to solve the above-mentioned problems.
That is to say, one aspect of the present invention is a wind turbine generator provided with a rotor head to which wind turbine blades are attached, a cover which covers the rotor head, and a nacelle which accommodates a power generating facility connected to the rotor head, and has an air circulation between the interior of the cover and the interior of the nacelle, wherein an air flow creation device which creates an air flow is provided inside the cover.

In the wind turbine generator, the cover and the rotor head are rotatably supported by the nacelle via the main shaft fixed to the rotor head. During the operation, when the wind turbine blades receive wind power, power to rotate the rotor head about the rotation axis is generated in the wind turbine blades, by which the rotor head is driven to rotate about the main shaft. This driving power for rotation is transmitted to the generator by having its rotational speed accelerated by the box. Thereby, the generator is driven to conduct the power generation.
At this time, since the cover and the rotor head are rotating relative to the nacelle which keeps a fixed posture, the positional relations of the cover and the rotor head relative to the nacelle are changed at all times.
In the present invention, air is circulated between the interior of the cover and the interior of the nacelle. This makes an inflow of air having a relatively low temperature from the nacelle to the cover (inflow port) as well as discharging heated air from the cover to the nacelle (exhaust port). By so doing, the interior of the cover is cooled down. There exist optimum positions for these inflow port and exhaust port as seen from the nacelle.

According to this aspect, since the air flow creation device which creates an air flow is provided inside the cover, the air circulation inside the cover is favorably done by the air flow created by the air flow creation device. By so doing, the interior of the cover can be efficiently cooled down.
In addition, since the air flow created by the air flow creation device is formed to flow in a substantially fixed direction relative to the nacelle, it becomes possible to smoothly conduct the air circulation created between the rotor head and the nacelle by having the upstream side of the air flow corresponding to the inflow port as well as having the downstream side corresponding to the exhaust port.
By so doing, the interior of the cover can be more efficiently cooled down.
In this manner, as the interior of the cover can be efficiently and reliably cooled down, the control devices can be normally operated to keep continue the power generation. It becomes possible to conduct the temperature management by cooling down the interior of the rotor head in a suitable manner for the increase in the size of the wind turbine generator, and thereby it becomes possible to improve the reliability and the durability of the wind turbine generator.

In the above-mentioned aspect, it is preferable that the air flow creation device creates the air flow from a lower side to an upper side.

Since air and such gaseous bodies are expanded as the temperature increases, the weight per fixed volume decreases, in other words, the buoyancy increases.
In the present invention, since the air flow creation device creates an air flow from a lower side to an upper side, air having a high temperature that has been heated as a result of cooling the devices inside the cover is induced upward. In this way, air having a larger buoyancy is pushed upward, because of which the air circulation can be efficiently conducted.
In this case, it is preferable that the inflow port for the inflow of air having a relatively low temperature from the nacelle to the cover is provided on a lower side, and the exhaust port for the discharge of the heated air from the cover to the nacelle is provided on an upper side.

In the above-mentioned aspect, the configuration may also be such that the air flow creation device comprises a blowing member which creates an air flow in a blowing direction.
In this case, the blowing member may be fixedly attached to the interior of the cover so that the blowing direction crosses over the axis of the rotor head, and also be designed to selectively create an air flow in either one of opposite directions along the blowing direction.

In this way, since the blowing member is fixedly attached to the interior of the cover so that the blowing direction crosses over the axis of the rotor head, the blowing member rotates about the axis of the rotor head along with the rotation of the cover and the rotor head in a unified manner. When an air flow is created only in one way along the blowing direction, the direction of the air flow is to be changed throughout 360 degrees.
In this configuration, the blowing member is designed to selectively create an air flow in either one of opposite directions along the blowing direction. Therefore, the blowing direction can be changed mutually between, for example, positions oppositely located across the axis of the rotor head, in other words, positions in rotation phases which are different by 180 degrees. By so doing, the directions of air flows at these opposite positions agree with each other. Therefore, the air flow direction can be limited within, for example, 180 degrees, by inverting the blowing direction for sending air out at predetermined positions in the rotating direction. In addition, the air flow direction can be more limited within a smaller angle range by stopping the blowing operation of the blowing member before and after these positions for inversion.

Accordingly, the blowing member is capable of creating an air flow in a substantially fixed direction relative to the nacelle. Furthermore, because the blowing member is fixedly attached, there is no need of providing a special movable mechanism. Thus, the structure can be simplified and the manufacture can be done at an inexpensive cost.
The angle at which the blowing direction crosses over the axis of the rotor head is preferably as close to 90 degrees as possible. This is because that the direction of air blown by the blowing member at a certain position and the direction of air blown by the blowing member at the 180 degree inverted position can conform with each other.
In addition, because the influence of fluctuations in rotation can be alleviated, it is desirable to arrange the blowing member close to the axis of the rotor head.

In the above-mentioned configuration, the blowing member may be arranged so that the blowing direction crosses over the axis of the rotor head, and may be attached to the interior of the cover rotatably about a rotation axis that is approximately orthogonal to the blowing direction.

In this way, since the blowing member is arranged so that the blowing direction crosses over the axis of the rotor head, the blowing member rotates about the axis of the rotor head along with the rotation of the cover and the rotor head in a unified manner. In a state where the blowing member is fixed, its blowing direction is changed throughout 360 degrees.
In this configuration, since the blowing member is attached to the interior of the cover rotatably about a rotation axis that is approximately orthogonal to the blowing direction, the blowing direction can be changed by rotation about the rotation axis. For example, when the angle by which the blowing member rotates about the axis of the rotor head and the angle by which the blowing member rotates about a rotation axis are set substantially equal to each other, the direction of an air flow created by the blowing member can be set substantially fixed irrespective of these angles. Accordingly, the blowing member is capable of creating an air flow in a substantially fixed direction relative to the nacelle.

As a means for rotating the blowing member, it is possible to consider to attach, for example, a weight to the blowing member in a position on the opposite side of the direction to create the air flow as seen from the rotation axis. By so doing, when the blowing member rotates about the axis of the rotor head, the blowing member rotates about its rotation axis so that the weight can be always located at the bottom. Thus, the air flow created by the blowing member can be oriented upward at all times. Since the air flow can be reliably oriented in a fixed direction only by attaching a weight, the structure can be simplified and the manufacture can be done at an inexpensive cost.
The angle at which the blowing direction crosses over the axis of the rotor head is preferably as close to 90 degrees as possible. This is because that the direction of air blown by the blowing member at a certain position and the direction of air blown by the blowing member at the 180 degree inverted position can conform with each other.
In addition, because the influence of fluctuations in rotation can be alleviated, it is desirable to arrange the blowing member close to the axis of the rotor head.

In the above-mentioned configuration, the arrangement may be such that: the air flow creation device comprises a fixed duct which has a cylindrical shape and is fixedly attached to the interior of the cover so that its longitudinal direction crosses over the axis of the rotor head, a blowing member fixedly attached to an approximate center in the longitudinal direction of the fixed duct so that an air flow can be created in one way along the longitudinal direction, and a first movable duct swingably attached to one end of the fixed duct on a downstream side of the air flow so as to form an extension from the fixed duct; and the first movable duct swings corresponding to a movement of the position of the fixed duct along with the rotation of the cover and the rotor head, and a blow-out direction of the air flow is oriented toward the downstream side in the substantially fixed direction.

According to this arrangement, the air flow created by the blowing member flows along the fixed duct and is blown out through the first movable duct.
Since the fixed duct is fixedly attached to the interior of the cover, the fixed duct rotates about the axis of the rotor head along with the rotation of the cover and the rotor head in a unified manner. By so doing, the air flow direction running through the fixed duct is changed throughout 360 degrees.
At this time, the first movable duct swings corresponding to a movement of the position of the fixed duct along with the rotation of the cover and the rotor head, and a blow-out direction of the air flow is oriented toward the downstream side in a substantially fixed direction. Therefore, the air flow can be created in a substantially fixed direction relative to the nacelle.

In the above-mentioned arrangement, the first movable duct may be attached with a first weight on the opposite side of a blow-out port of the air flow across the center of swing.

By so doing, when the fixed duct rotates about the axis of the rotor head, the first movable duct swings so that the first weight can be always located at the bottom. Thus, the blow-out port of the air flow can be oriented upward at all times.

In the above-mentioned arrangement, the configuration may also be such that: the air flow creation device comprises a second movable duct swingably attached to one end of the fixed duct on an upstream side of the air flow so as to form an extension from the fixed duct; the second movable duct swings corresponding to a movement of the position of the fixed duct along with the rotation of the cover and the rotor head; and a blow-in direction of the air flow is oriented toward the upstream side in the substantially fixed direction mentioned above.

According to this configuration, the second movable duct swings corresponding to a movement of the position of the fixed duct along with the rotation of the cover and the rotor head, and a blow-in direction of the air flow is oriented toward the upstream side in a substantially fixed direction. Therefore, air can be blown in from the upstream side in a substantially fixed direction relative to the nacelle. Thus, with a corporation of the first movable duct, the air flow can be reliably created in a substantially fixed direction relative to the nacelle.

In the above-mentioned configuration, the second movable duct may be attached with a second weight on the side of a blow-in port of the air flow.

By so doing, when the fixed duct rotates about the axis of the rotor head, the second movable duct swings so that the second weight can be always located at the bottom. Thus, the blow-in port of the air flow can be oriented downward at all times.

In the above-mentioned aspect, the configuration may be such that the air flow creation device comprises at least one through hole portion that pierces a lateral face of the cover, and an open/close member for opening/closing the through hole portion.

In the wind turbine generator, the wind turbine blades are set to face upwind at all times, and thus the cover also faces upwind. When the through hole portion is opened, a wind passes therethrough and flows into the cover. When the through hole portion is closed, no wind would pass therethrough and flow into the cover.
Since the through hole portion is provided in a lateral face of the cover, the position of the through hole portion is moved along the circumference when the cover rotates about the axis of the rotor head.
If the through hole portion is set to open in an predetermined range of the circumference and close in the other area by the open/close member, a wind can pass through the through hole portion and flows into the cover to create an air flow toward the other side within the predetermined range of the circumference. That is to say, therefore, the air flow creation device is capable of creating an air flow in a substantially fixed direction relative to the nacelle.
The position to open the through hole portion is preferably within a range located on a lower side of the cover, because intrusions of rainwater and such matters are relatively little and the air flow direction is favorable.
Moreover, it is also possible to provide a plurality of through hole portions in the circumferential direction. By so doing, the air flow can be created in a relatively continuous fashion.

The above-mentioned configuration may also be such that: the open/close member comprises a lid portion which is a plate material whose opposite faces constitute a close face and an open face, and which is rotatably supported by the cover at a position on the open face side from the center in the thickness direction, and a third weight attached to the open face; and the through hole portion is closed when the close face comes to face the through hole portion.

By so doing, the lid portion rotates so that the third weight can be always located at the bottom. When the through hole portion, that is to say, the open/close member, is located on a lower side of the cover, the third weight is located on a lower side. Thus, the close face is located on an upper side, that is to say, inside of the cover, and the open face comes to face the through hole portion. In this state, when the cover rotates about the axis of the rotor head and the through hole portion passes over the horizontal position, the open face comes to an upper side of the close face, in other words, the third weight is located on an upper side. Thus, the lid portion is rotated by the movement of the third weight to the downward. By so doing, the close face comes to face the through hole portion, and therefore the through hole portion is closed by the close face.
By so doing, the through hole portion is opened in an approximately lower half area and closed in an approximately upper half area. Thus, an air flow running from a lower side to an upper side can be created.

### {Advantageous Effects of Invention}

According to the present invention, since the air flow creation device for creating an air flow in a substantially fixed direction relative to the nacelle is provided inside the cover, the interior of the cover can be efficiently cooled down.
In addition, since the air flow created by the air flow creation device is formed to flow in a substantially fixed direction relative to the nacelle, it becomes possible to smoothly conduct the air circulation created between the rotor head and the nacelle.
In this way, since the interior of the cover can be efficiently and reliably cooled down, the control devices can be normally operated to keep continue the power generation. It becomes possible to conduct the temperature management by cooling down the interior of the rotor head in a suitable manner for the increase in the size of the wind turbine generator, and thereby it becomes possible to improve the reliability and the durability of the wind turbine generator.

### {Brief Description of Drawings}

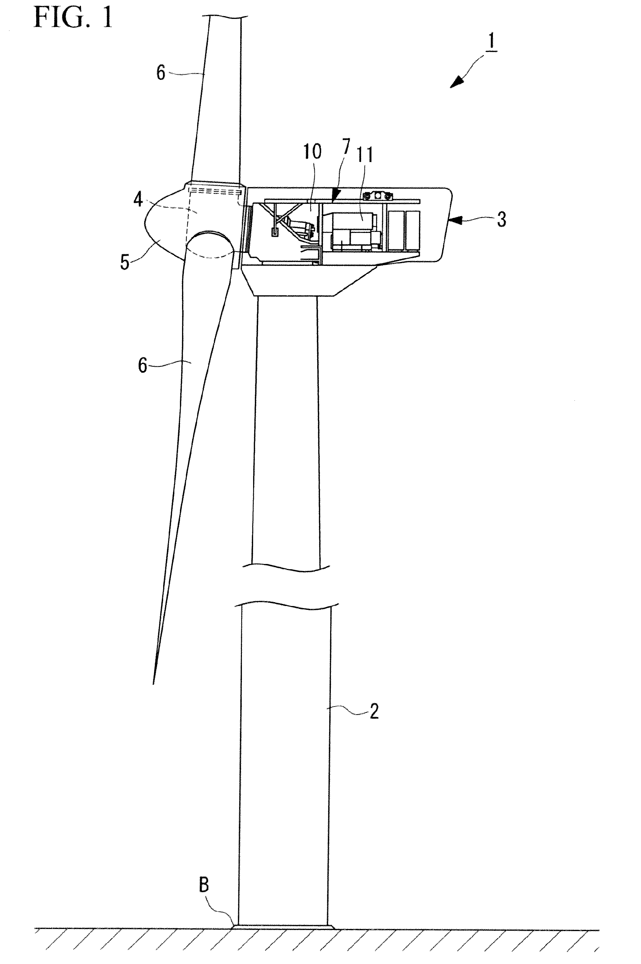

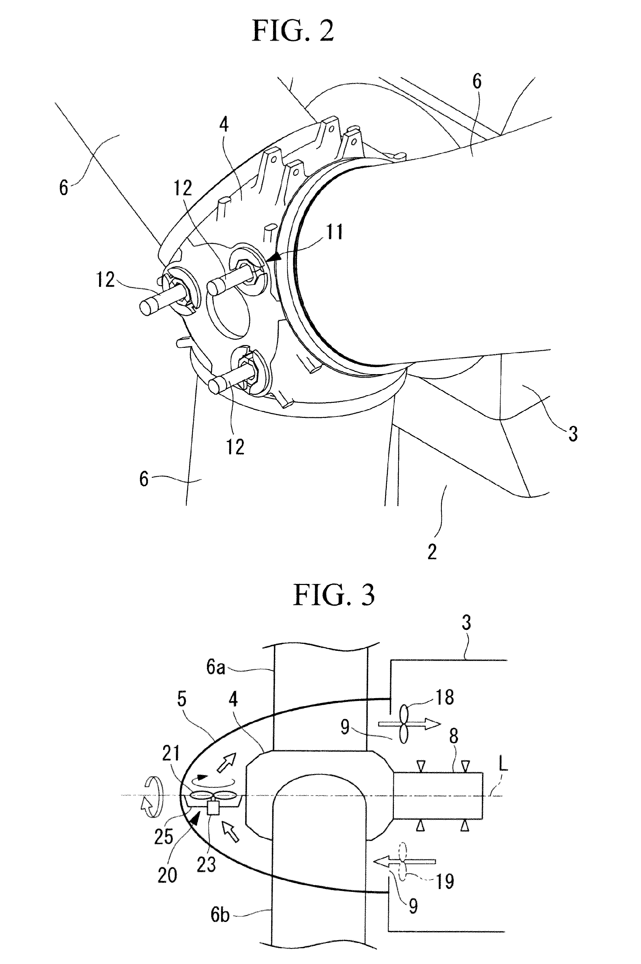

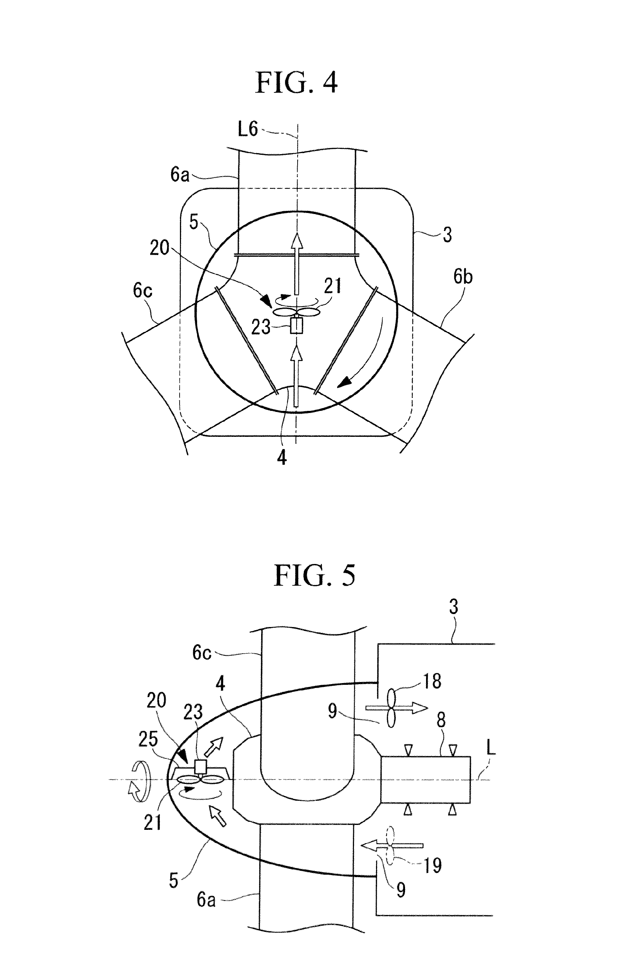

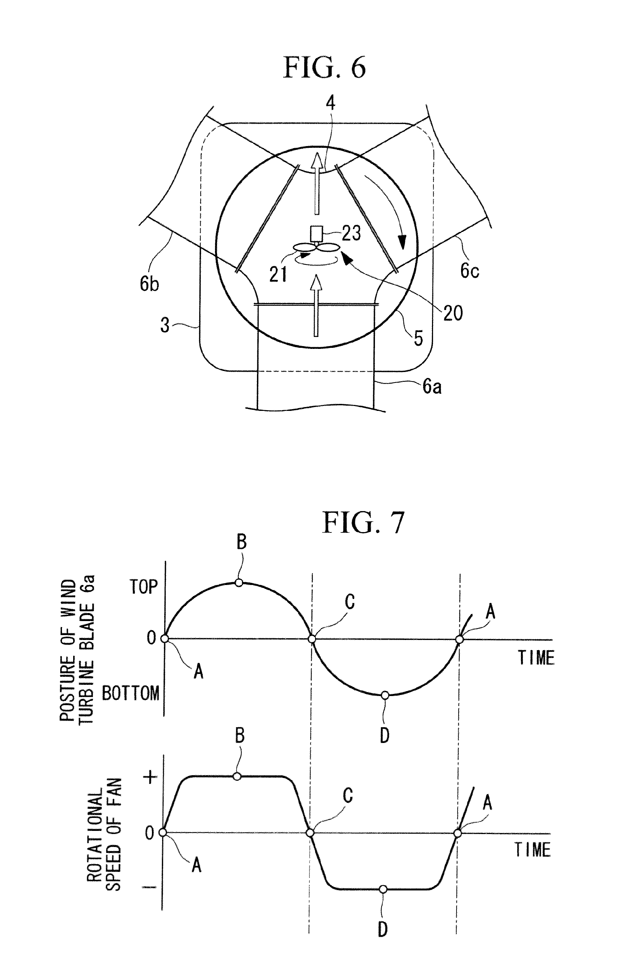

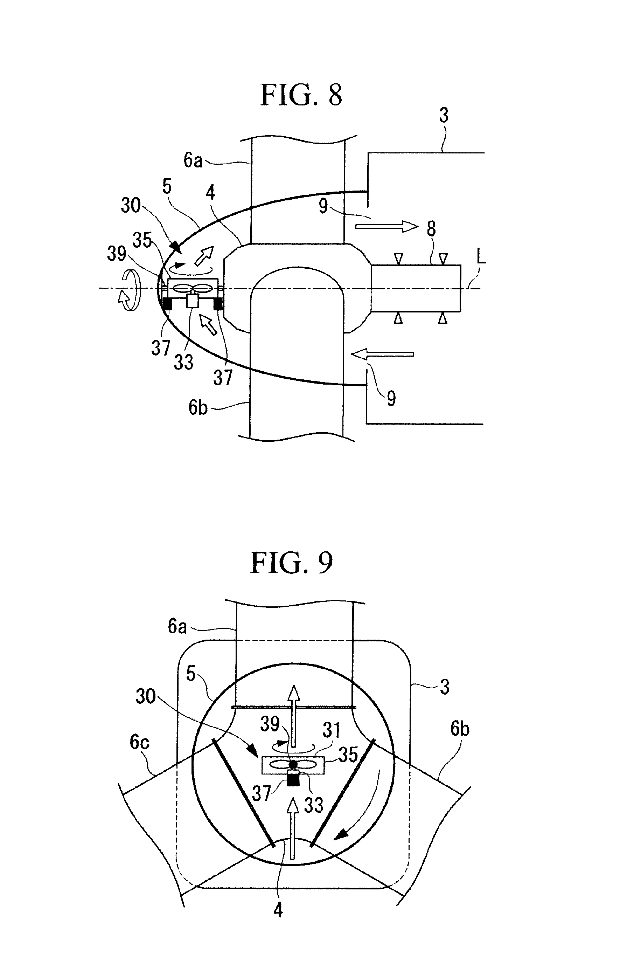

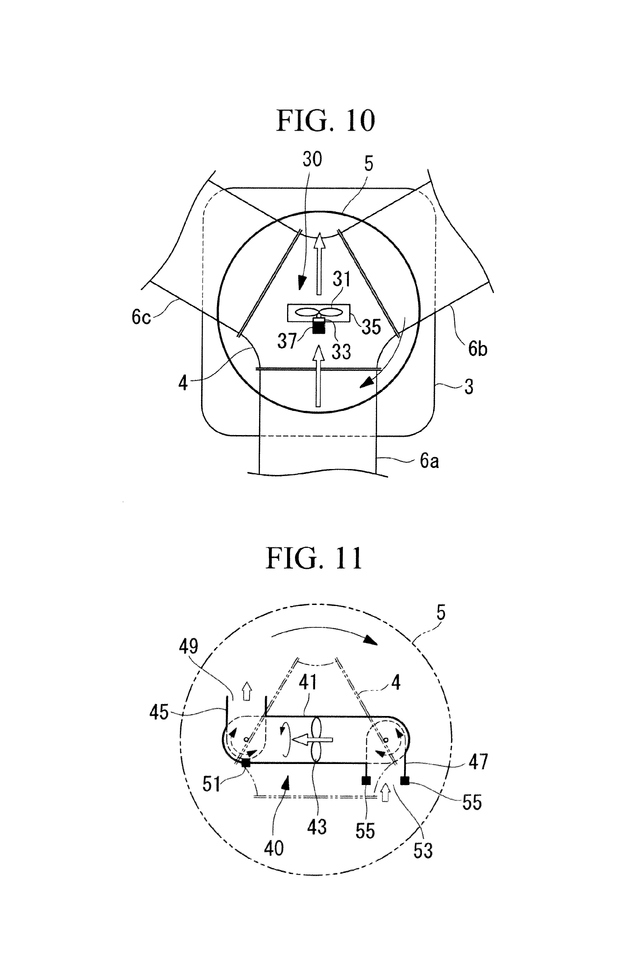

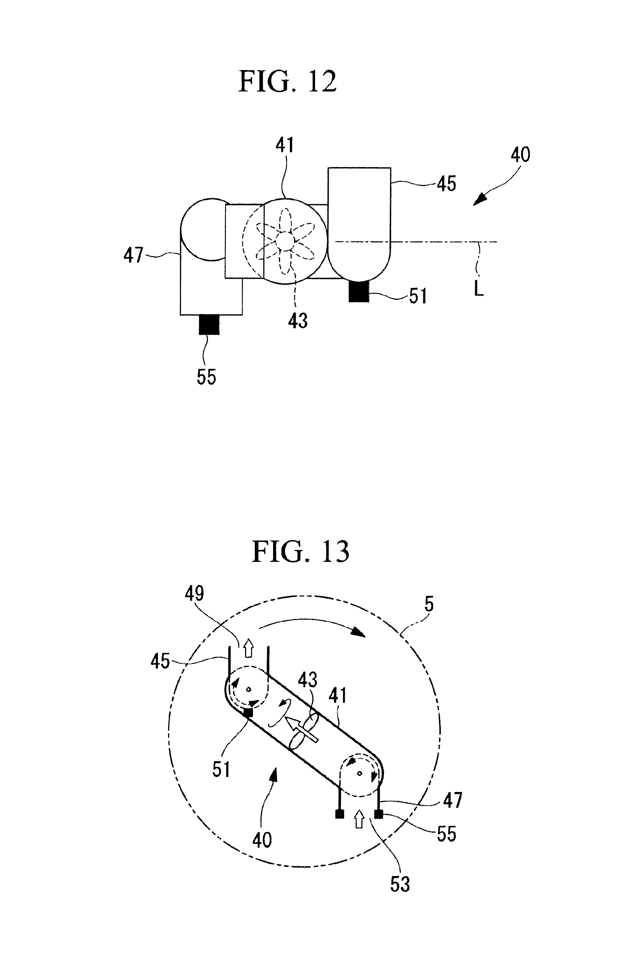

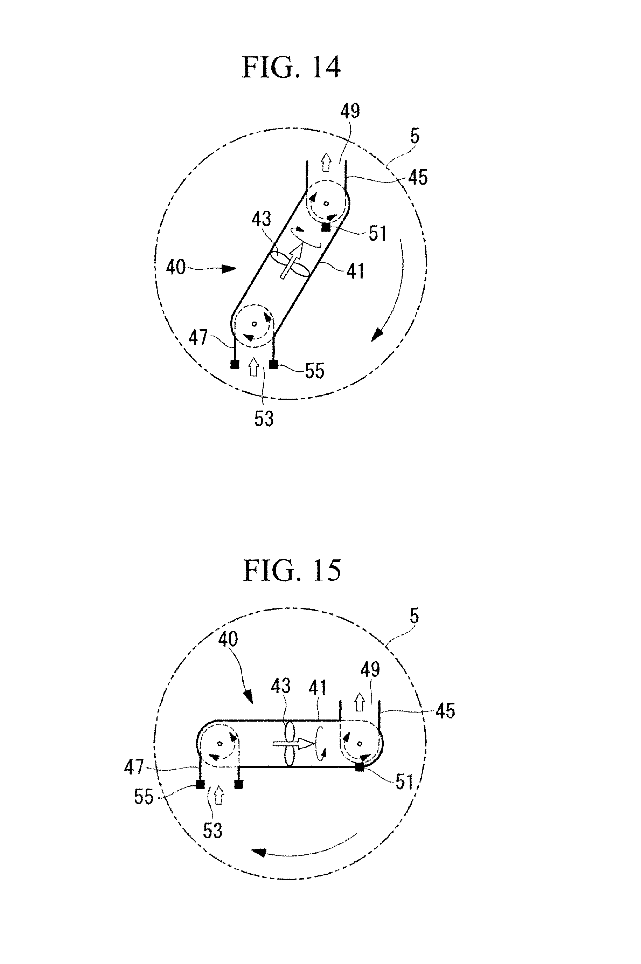

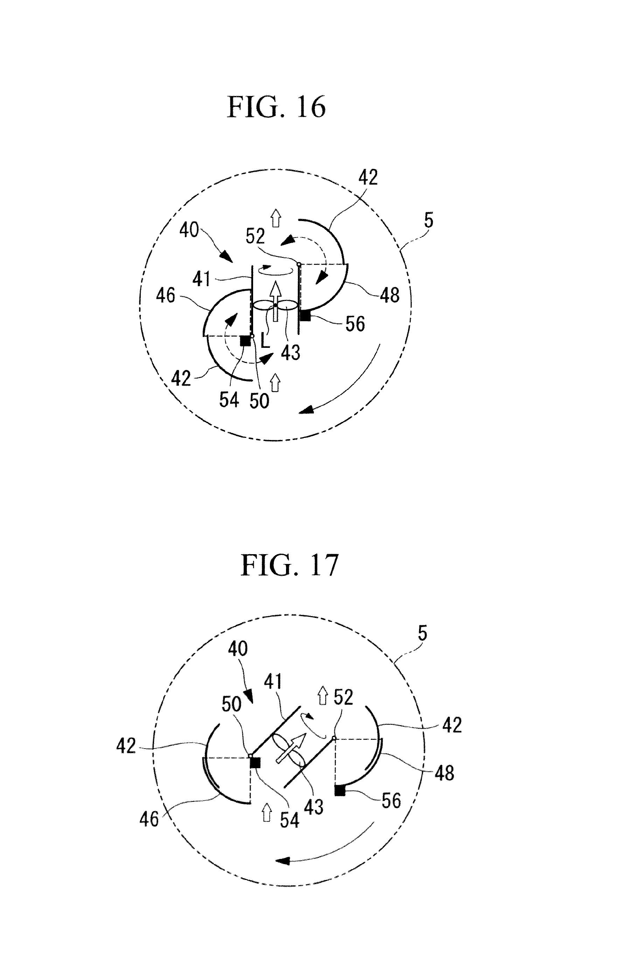

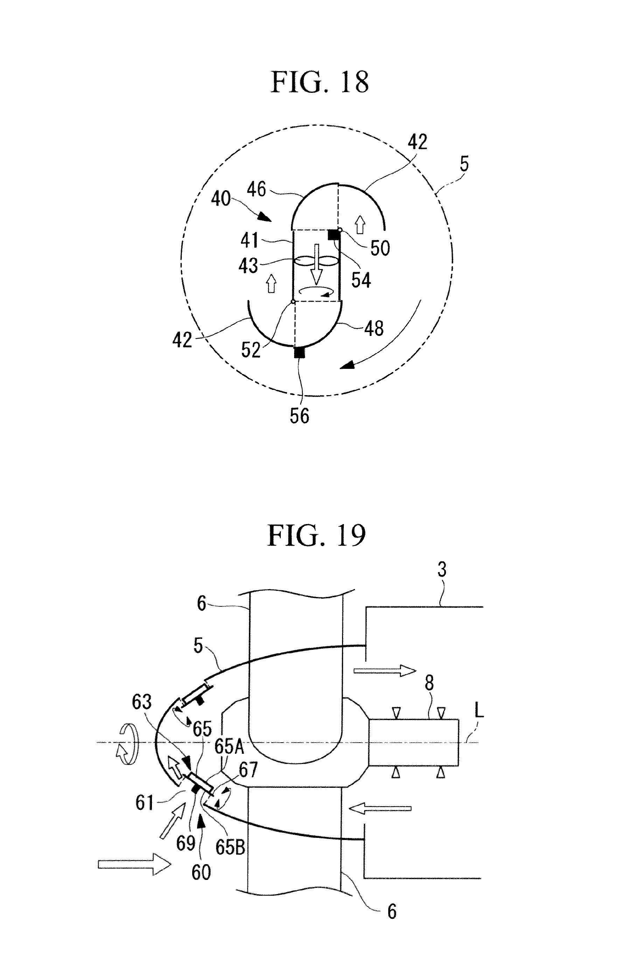

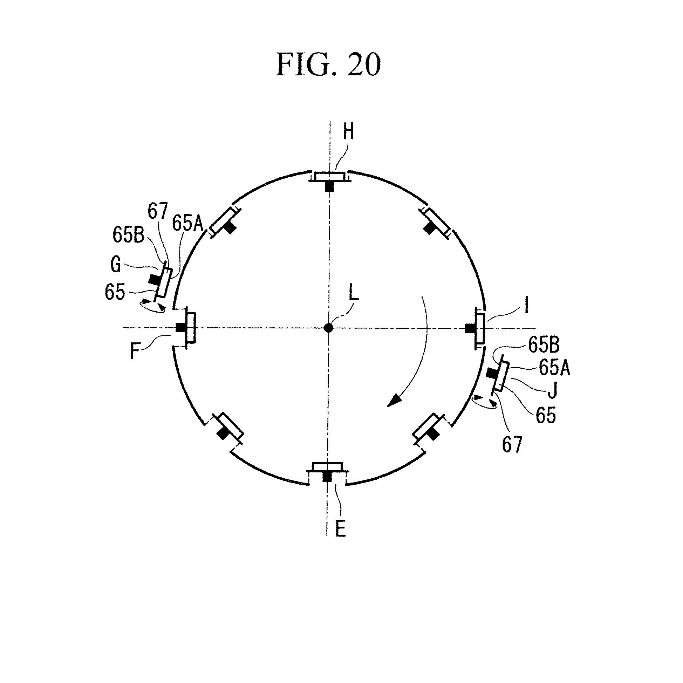

{Fig. 1} Fig. 1 is a side view showing the overall schematic configuration of the wind turbine generator according to a first embodiment of the present invention.
{Fig. 2} Fig. 2 is a partially enlarged view showing the configuration of the rotor head of Fig. 1.
{Fig. 3} Fig. 3 is a schematic side view showing the interior of the cover according to the first embodiment of the present invention.
{Fig. 4} Fig. 4 is a schematic front view showing the interior of the cover according to the first embodiment of the present invention.
{Fig. 5} Fig. 5 is a schematic side view showing the interior of the cover according to the first embodiment of the present invention.
{Fig. 6} Fig. 6 is a schematic front view showing the interior of the cover according to the first embodiment of the present invention.
{Fig. 7} Fig. 7 shows graphs representing relations between the position of a wind turbine blade and the rotational speed of the fan of the air flow creation device according to the first embodiment of the present invention.
{Fig. 8} Fig. 8 is a schematic side view showing the configuration including the interior and the surrounding area of the cover according to the second embodiment of the present invention.
{Fig. 9} Fig. 9 is a schematic front view showing the configuration including the interior and the surrounding area of the cover according to the second embodiment of the present invention.
{Fig. 10} Fig. 10 is a schematic front view showing the configuration including the interior and the surrounding area of the cover according to the second embodiment of the present invention.
{Fig. 11} Fig. 11 is a schematic front view showing the configuration of the air flow creation device according to a third embodiment of the present invention.
{Fig. 12} Fig. 12 is a schematic side view showing the configuration of the air flow creation device according to the third embodiment of the present invention.
{Fig. 13} Fig. 13 is a schematic front view showing the configuration of the air flow creation device according to the third embodiment of the present invention at a different rotational position.
{Fig. 14} Fig. 14 is a schematic front view showing the configuration of the air flow creation device according to the third embodiment of the present invention at another different rotational position.
{Fig. 15} Fig. 15 is a schematic front view showing the configuration of the air flow creation device according to the third embodiment of the present invention at yet another different rotational position.
{Fig. 16} Fig. 16 is a schematic front view showing the configuration of a modified example of the air flow creation device according to the third embodiment of the present invention at a certain rotational position.
{Fig. 17} Fig. 17 is a schematic front view showing the configuration of the modified example of the air flow creation device according to the third embodiment of the present invention at a different rotational position.
{Fig. 18} Fig. 18 is a schematic front view showing the configuration of the modified example of the air flow creation device according to the third embodiment of the present invention at another different rotational position.
{Fig. 19} Fig. 19 is a schematic side view showing the schematic configuration of the air flow creation device according to a fourth embodiment of the present invention.
{Fig. 20} Fig. 20 is a schematic front view showing the operation of the air flow creation device according to the fourth embodiment of the present invention.

### {Description of Embodiments}

Embodiments of a wind turbine generator according to the present invention will be described hereinbelow with reference to the drawings.

### First Embodiment

Here is a description of a wind turbine generator 1 according to a first embodiment of the present invention with reference to Fig. 1 to Fig. 7.
Fig. 1 is a side view showing the overall schematic configuration of the wind turbine generator 1 according to this embodiment.
The wind turbine generator 1 is provided with a tower 2 that is vertically erected on a foundation B, a nacelle 3 mounted on the upper end of the tower 2, a rotor head 4 mounted on the nacelle 3 so as to be rotatable about a substantially horizontal rotation axis L (axis of the rotor head), a cover 5 which covers the rotor head 4, a plurality of wind turbine blades 6 mounted radially about the rotation axis L of the rotor head 4, and a power generating facility 7 which conducts power generation by the rotation of the rotor head 4.

This embodiment is described as being applied to an example in which three wind turbine blades 6 are provided. For the convenience of the description, the wind turbine blades 6 are distinguished from each other by appending suffixes "a", "b", and "c" when specifying any particular one.
The number of the wind rotor blades 6 is not limited to three and may alternatively be two or more than three; it is not specifically limited.

As shown in Fig. 1, the tower 2 has a columnar structure extending upward (upward in Fig. 1) from the foundation B and is constituted of, for example, a plurality of units that are connected in the vertical direction.
The nacelle 3 is provided at the uppermost part of the tower 2. When the tower 2 is constituted of the plurality of units, the 3 is set on top of the uppermost unit.

As shown in Fig. 3, the nacelle 3 rotatably supports the main shaft 8 that is fixed to the rotor head 4.
As shown in Fig. 1, for the nacelle 3 accommodates a power generating facility 7 equipped with a generator 11 that is connected to the rotor head 4 via a gear box 10 which is coaxial with the rotor heal 4.
That is, the generator output power W is obtained from the generator 11 by driving the generator 11 while accelerating the rotation of the rotor heal 4 with the gear box 10.

the nacelle, 3, the internal temperature increases due to heat generated by the rotation of the gear box 10, the generator 11, and the like, and heat generated by an inverter (not shown) and the like.
Therefore, although they are not shown, an inverter cooler and a lubricant oil cooler are installed to cool them down, and air inlet and exhaust ports, equipped with a cooling fan, are provided in appropriate positions of the nacelle 3 so as to ventilate and cool down the interior.
For this reason, the interior of the nacelle 3 is kept at a relatively low temperature due to the cooling and the ventilation of the internal air.

Fig. 2 is a partially enlarged view showing the configuration of the rotor head 4 of Fig. 1. Fig. 3 to Fig. 6 are schematic views showing the configuration including the interior and the surrounding area of the cover 5. Fig. 3 and Fig. 5 are schematic side views while Fig. 4 and Fig. 6 are schematic front views.
As shown in Fig. 1 and Fig. 2, the rotor head 4 is attached with a plurality of wind turbine blades 6 radially about the rotation axis L, and the periphery of the rotor head 4 is sealingly enclosed by the cover 5.

The rotor head 4 is provided with pitch driving devices 12 for changing the pitch angle of the wind turbine blades 6 in a one-to-one correspondence with the wind turbine blade 6 so that each pitch driving devise 12 can rotate each wind turbine blades 6 about the axis of the wind turbine blade 6.
The rotor head 4 accommodates hydraulic devices which the pitch driving devices 12, a control and the like. Of these, hydraulic devices such as a hydraulic pump serve as heat generating elements, while electrical/electronic components which constitute the control devices such as a control panel are limited by the temperature condition of the environment where they are installed. Moreover, because intrusions of, rainwater and such matters are not preferable for these devices, the cover 5 needs to have a sealing property.

A communication channel 9 for circulating air between the interior of the cover 5 and the interior of the nacelle 3 is formed between the cover 5 and the nacelle 3. The communication channel 9 is attached with a partition (not shown) such as a punching metal or a web member that separates the both spaces of the interior of the cover 5 and the interior of the nacelle 3 while retaining a communicated state in which air can circulate between both spaces.

Although it is good to have the existence of the communication channel 9 per se, it is also possible to provide a circulation promoting part which actively accelerates the circulation.
For example, as shown in Fig. 3, as for this circulation promoting part, a fan 18 which creates an air flow to draw air having a relatively high temperature inside the cover 5 into the nacelle 3, may be provided to the nacelle 3 in a certain position on the upper side of the communication channel 9. Moreover, a fan 19 which creates an air flow to push air having a relatively low temperature inside the nacelle 3 into the cover 5, may be provided at the same time to the nacelle 3 in a certain position on the lower side of the communication channel 9.
In this case, it is also possible to provide either one of the fan 18 and the fan 19.
The fan 18 and the fan 19 may be driven by a gear wheel engaged with a gear wheel that is attached to the rotating rotor head 4 or the main shaft 8. By so doing, the fan 18 and the fan 19 can be operated in a mechanical manner without a drive source such as an electric motor.

In addition, this circulation promoting part is not limited to these fans 18 and 19, and may be, for example, a plurality of aerofoil guide members which are fixed to the nacelle 3 side and are arranged at substantially equal pitches along an approximately half round in the circumferential direction of a circular shape formed by the communication channel 9.
When the cover 5 and the rotor head 4 rotate, air inside the cover 5 rotates and is guided by the guide members to be taken into the nacelle 3. By performing a relatively rotational motion of the guide members without needing special motive power, the amount of air going toward the nacelle 3 side through the communication channel 9 formed between the rotating-side cover 5 and the fixed-side nacelle 3 can be increased.

An air flow creation device 20 is mounted within a space between the front end of the rotor head 4 inside the cover 5 and the front end of the cover 5, that is to say, the interior space of the cover 5.
The air flow creation device 20 is equipped with a fan (blowing member) 21, a motor 23 whose rotation axis is attached with the fan 21 so that the fan 21 can be driven to rotate, and an attachment member 25 for attaching the fan 21 and the motor 23 to the inside of the cover 5.
As shown in Fig. 4, the air flow creation device 20 is arranged so that the center of the axis of the fan 21 runs along the axis L6 of the wind turbine blade 6a, the fan 21 comes to the tip side of the wind turbine blade 6a, and the motor 23 comes to the blade root side.

The air flow creation device 20 is fixedly attached to a position so that the rotation axis L can pass through an approximate center in the thickness direction of the fan 21. That is to say, the air flow creation device 20 is fixedly attached so that the blowing direction of the fan 21 can be approximately orthogonal to (cross over) the rotation axis L.
In this way, since the fan 21 is arranged so that the blowing direction can be orthogonal to the rotation axis L of the rotor head 4, the fan 21 rotates about the rotation axis L along with the rotation of the cover 5 and the rotor head 4 in a unified manner. Therefore, in a state where the blowing direction is fixed to one way, the blowing direction of the fan 21 is changed throughout 360 degrees.

The motor 23 is operated to rotate forward or backward by a controller (not shown). By so doing, the fan 21 also rotates forward or backward.
For example, when the fan 21 rotates forward, the fan 21 blows air from the motor 23 to the fan 21 as shown in Fig. 3 and Fig. 4.
On the other hand, when the fan 21 rotates backward, the fan 21 blows air from the fan 21 to the motor 23 as shown in Fig. 5 and Fig. 6.

Next is a description of the operation of the wind turbine generator 1 having the above-mentioned configuration.
In the wind turbine generator 1, the power of wind hitting against the wind turbine blades 6 from the direction of the rotation axis L of the rotor head 4 is converted to motive power to rotate the rotor head 4 about the rotation axis L.
The rotation of this rotor head 4 is transmitted to the gear box 10 via the main shaft 8. This rotation is accelerated by the gear box 10 and input into the generator 11. Thereby, power generation is conducted by the generator 11. The electric power generated by the generator 11 is converted by a transformer or the like to electric power to fit with the target to be supplied with the electric power, for example, AC power having a frequency of 50 Hz or 60 Hz.
Here, in order to efficiently provide the power of wind to the wind turbine blades 6 at least during the power generation, the nacelle 3 is so appropriately rotated in a horizontal plane that the cover 5 and the rotor head 4 are oriented upwind.

At this time, in the upper area of the communication channel 9, an air flow running from the interior of the cover 5 to the nacelle 3 side is created by the fan 18, by which air having a relatively high temperature that has been heated up by heat generated from the pitch driving devices 12 and the like is drawn from the interior of the cover 5 and sent to the nacelle 3 side.
By so doing, the internal pressure of the cover 5 decreases, relative to which therefore the internal pressure of the nacelle 3 increases. In the lower area of the communication channel 9, an air flow having a relatively low temperature running from the nacelle 3 side at a high internal pressure, into the cover 5, is created. The interior of the cover 5 is cooled down by this air flow.

Even without the use of the circulation promoting part such as the fan 18, this kind of air flow is created by the communication channel 9. That is to say, within the cover 5, air having a relatively high temperature moves upward, and so as to compensate this air flow, air having a relatively low temperature flows from the nacelle 3 side to the cover 5 side in the lower area of the communication channel 9. Since the internal pressure on the upper side of the cover 5 increases, air having a relatively high temperature flows from the cover 5 side to the nacelle 3 side in the upper area of the communication channel 9.

Incidentally, since the cover 5, the wind turbine blades 6, and the rotor head 4 are rotating, the air flow inside the cover 5 does not always conform with the air flow running through the communication channel 9. Thus, the flow of air circulating through the communication channel 9 becomes insufficient.
This may cause a concern such that the interior space of the cover 5 can not be sufficiently cooled down.
In order to solve this issue, in this embodiment, the air flow creation device 20 is provided inside the cover 5.

Hereunder is a description of the operation of this air flow creation device 20.
When the rotor head 4 rotates, the wind turbine blades 6 move around the rotation axis L, for example, clockwise in the circumferential direction.
At this time, as shown in the top graph of Fig. 7, the posture of, for example, the wind turbine blade 6a, is changed. The wind turbine blade 6a sequentially rises up from the horizontal position A extending from the rotor head 4 to the left as seen from the wind direction until it comes to the top position B extending to the top (the position shown in Fig. 3 and Fig. 4). Next, the wind turbine blade 6a is sequentially inclined to the right until it comes to the horizontal position C extending to the right. When the rotor head 4 rotates further, the tip end of the wind turbine blade 6a starts to face downward and this inclination is increased until it comes to the bottom position D extending to the bottom (the position shown in Fig. 5 and Fig. 6). Then, the wind turbine blade 6a comes back to the horizontal position A and this posture movement is repeated.

The controller changes the rotational speed of the motor 23, that is to say, the fan 21, as shown in the bottom graph of Fig. 7. In other words, from the horizontal position A through the top position B to the horizontal position C, the motor 23 rotates forward and the fan 21 blows air from the motor 23 to the fan 21, that is to say, toward the tip side of the wind turbine blade 6a. The motor 23 creates a predetermined rotational speed in intermediate positions and gradually increases or decreases the rotational speed in positions close to the horizontal positions A and C.
Accordingly, during this period, for example as shown in Fig. 3 and Fig. 4 serving as the state of the top position B, the tip end of the wind turbine blade 6a is located on the upper side from the rotor head 4, that is to say, from the root, because of which the fan 21 blows air upward.
In the vicinities of the horizontal positions A and C, the fan 21 blows air in horizontal directions; however, the amount of air blow is reduced in these areas. This makes it possible to avoid a large influence onto the blowing direction.

On the other hand, from the horizontal position C through the bottom position D to the horizontal position A, the motor 23 is rotated backward and the fan 21 blows air from the fan 21 to the motor 23, that is to say, toward the root side of the wind turbine blade 6a. The motor 23 creates a predetermined rotational speed in intermediate positions and gradually increases or decreases the rotational speed in positions close to the horizontal positions A and C.
Accordingly, during this period, for example as shown in Fig. 5 and Fig. 6 serving as the state of the bottom position D, the tip end of the wind turbine blade 6a is located on the lower side from the rotor head 4, that is to say, from the root, because of which the fan 21 blows air upward.
In the vicinities of the horizontal positions A and C, the fan 21 blows air in horizontal directions; however, the amount of air blow is reduced in these areas. This makes it possible to avoid a large influence onto the blowing direction.

In this manner, the blowing direction of the fan 21 is inverted before and after the positions where the wind turbine blade 6a passes through the upper half area and the lower half area. Therefore, although the air flow created by the fan 21 is inclined in a plane orthogonal to the rotation axis L, the direction is oriented roughly from the lower side to the upper side relative to the nacelle 3.
In this manner, since the air flow creation device 20 creates an air flow from the lower side to the upper side within the cover 5, the air circulation is favorably done inside the cover 5. By so doing, the interior of the cover 5 can be efficiently cooled down. This makes it possible to more efficiently conduct the air circulation in corporation with the induction to the upward of air having a high temperature that has been heated as a result of cooling down the pitch driving devices 12 and the like inside the cover 5, due to the increase in the buoyancy.

Since the air flow created by the air flow creation device 20 is formed to flow in a substantially fixed direction from the lower side to the upper side relative to the nacelle 3, the downstream side of the air flow conforms with the region where a flow runs from the cover 5 side to the nacelle 3 side, which is created in the upper area of the communication channel 9. The upstream side of the air flow conforms with the region where a flow runs from the nacelle 3 side to the cover 5 side, which is created in the lower area of the communication channel 9.
By so doing, it becomes possible to smoothly conduct the air circulation created between the interior of the cover 5 and the interior of the nacelle 3, and therefore the interior of the cover 5 can be more efficiently cooled down.
Since the interior of the cover 5 can be efficiently and reliably cooled down in this manner, the control devices for the pitch driving devices 12 can be normally operated to keep continue the power generation.
It becomes possible to conduct the temperature management in a suitable manner for the increase in the size of the wind turbine generator 1 by cooling down the interior of the cover 5, and thereby it becomes possible to improve the reliability and the durability of the wind turbine generator 1.

Because the air flow creation device 20 is fixedly attached to the cover 5 and the rotor head 4, there is no need of providing a special movable mechanism. Thus, the structure can be simplified and the manufacture can be done at an inexpensive cost.
In this embodiment, the influence of the creation of air flows running in horizontal directions can be alleviated by reducing the rotational speed in the vicinities of the horizontal positions A and C. This can also be achieved by stopping the rotation of the fan 21 in the vicinities of the horizontal positions A and C.

Moreover, in this embodiment, the angle at which the axis of the fan 21 crosses over the rotation axis L of the rotor head 4 is set to be approximately orthogonal. Thus, the direction of an air blown by the fan 21 at a certain position and the direction of an air blown by the fan 21 at the 180 degree inverted position conform with each other. This crossing angle may be changed from approximately orthogonal to inclined to both sides. By so doing, the direction of the air flow created by the fan 21 can be oriented toward a direction which is more necessary for the rotor head 4. On the other hand, these air flows do not conform with each other in the direction of the rotation axis L, which weakens the effect of creating air flows in a fixed direction. If it is important to create air flows in a fixed direction, the degree of inclination is desirably as small as possible.

In this embodiment, considering the buoyancy, the flow-in position at which air flows from the cover 5 side into the nacelle 3 side is set in the upper area of the communication channel 9, and the direction of an air flow created by the air flow creation device 20 is set to run from the lower side to the upper side; however, the configuration is not limited to this.
That is to say, regarding the access of air between the nacelle 3 and the cover 5, there exist optimum positions for blow-in and blow-out as seen from the nacelle 3 because the pressure from the outside is not uniform due to the asymmetrical shape of the nacelle 3 and the existence of the tower 2. The position at which the rotation of the fan 21 is inverted in the air flow creation device 20 can be adjusted so that the air flow direction created by this can correspond to these optimum positions for blow-in and blow-out.

### Second Embodiment

Next is a description of a second embodiment of the present invention with reference to Fig. 8 to Fig. 10.
The basic configuration of the wind turbine generator 1 according to this embodiment is the same as that of the first embodiment, while the configuration of the air flow creation device is different. Thus, only the difference is described in this embodiment, and other overlapping descriptions are omitted. The same reference signs are used for components the same as those of the first embodiment, and detailed descriptions thereof are omitted.
Fig. 8 to Fig. 10 are schematic views showing the configuration including the interior and the surrounding area of the cover 5. Fig. 8 is a schematic side view while Fig. 9 and Fig. 10 are schematic front views.

An air flow creation device 30 of this embodiment is mounted within a space between the front end of the rotor head 4 inside the cover 5 and the front end of the cover 5, that is to say, the interior space of the cover 5.
The air flow creation device 30 is equipped with a fan (blowing member) 31, a motor 33 whose rotation axis is attached with the fan 31 so that the fan 31 can be driven to rotate, an attachment member 35 for attaching the fan 31 and the motor 33 to the inside of the cover 5, and weights 37.
The attachment member 35 is in an approximate cylindrical shape covering the fan 31, and a support shaft 39 is provided in an approximate center in the thickness direction of the attachment member 35.

The support shaft 39 extends along the rotation axis L, and both ends thereof are rotatably supported by the cover 5 and the rotor head 4.
As shown in Fig. 8 and Fig. 9, two weights 37 are attached to the surface on the motor 33 side of the attachment member 35 while having the motor 33 therebetween alongside the rotation axis L.
The motor 33 is operated to rotate in a fixed direction by a controller (not shown).
By so doing, the fan 31 rotates in a fixed direction, and air is blown from the motor 33 to the fan 31.

Since the air flow creation device 30 is attached to the cover 5 and the rotor head 4, it is moved in the rotating direction along with the rotation of the cover 5 and the rotor head 4.
The air flow creation device 30 is rotatably supported about the rotation axis L. Thus, even if the air flow creation device 30 is moved in the rotating direction, it rotates (autorotates) about the support shaft 39 so that the heavy weights 37 can be always located at the bottom.
By so doing, the motor 33 located on the same side with the weights 37 oppositely to the fan 31 across the support shaft 39 is always located at the bottom.

Next is a description of the operation of the wind turbine generator 1 having the above-mentioned configuration, mainly regarding the operation of the air flow creation device 30.
When the power of wind hitting against the wind turbine blades 6 from the direction of the rotation axis L of the rotor head 4 makes the rotor head 4 rotate about the rotation axis L, the wind turbine blades 6 are moved about the rotation axis L for example, clockwise in the circumferential direction. In the air flow creation device 30, the fan 31 creates an air flow from the motor 33 side to the fan 31 side by the rotation of the motor 33.
For example, as shown in Fig. 8 and Fig. 9, when the wind turbine blade 6a is in a position extending to the top, the weights 37 are located on the lower side and thus the motor 33 is located on the lower side from the fan 31 in the air flow creation device 30. The fan 31 creating an air flow from the motor 33 side to the fan 31 side blows air upward.

When the wind turbine blade 6a rotates further clockwise, the air flow creation device 30 rotates about the support shaft 39 so that the weights 37 can be always located at the bottom. Therefore, the fan 31 can blow air upward at all times. For example, as shown in Fig. 10, when the wind turbine blade 6a rotates by 180 degrees and located in a position extending to the bottom, the air flow creation device 30 rotates about the support shaft 39 by 180 degrees to keep the posture of the weights 37 at the bottom. Therefore, the fan 31 blows upward.

In this manner, even when the cover 5 and the rotor head 4 rotate, the air flow creation device 30 rotates about the support shaft 39 so that the weights 37 can be always located at the bottom. The air flow created by the fan 31 can be oriented upward at all times.
Accordingly, the fan 31 is capable of creating an air flow in a substantially fixed direction relative to the nacelle 3. Since the air flow creation device 30 creates an air flow from the lower side to the upper side within the cover 5, the air circulation is favorably done inside the cover 5.
By so doing, the interior of the cover 5 can be efficiently cooled down. This makes it possible to more efficiently conduct the air circulation in corporation with the induction to the upward of air having a high temperature that has been heated as a result of cooling down the pitch driving devices 12 and the like inside the cover 5, due to the increase in the buoyancy.

Since the air flow created by the air flow creation device 30 is formed to flow in a substantially fixed direction from the lower side to the upper side relative to the nacelle 3, the downstream side of the air flow conforms with the region where a flow runs from the cover 5 side to the nacelle 3 side, which is created in the upper area of the communication channel 9. The upstream side of the air flow conforms with the region where a flow runs from the nacelle 3 side to the cover 5 side, which is created in the lower area of the communication channel 9.
By so doing, it becomes possible to smoothly conduct the air circulation created between the interior of the cover 5 and the interior of the nacelle 3, and therefore the interior of the cover 5 can be more efficiently cooled down.
Since the interior of the cover 5 can be efficiently and reliably cooled down in this manner, the control devices for the pitch driving devices 12 can be normally operated to keep continue the power generation.
It becomes possible to conduct the temperature management in a suitable manner for the increase in the size of the wind turbine generator 1 by cooling down the interior of the cover 5, and thereby it becomes possible to improve the reliability and the durability of the wind turbine generator 1.

In the air flow creation device 30, the support shaft 39 is rotatably attached to the cover 5 and the rotor head 4, and the air flow can be reliably oriented in a fixed direction only by attaching the weights 37 to the motor 33 side of the attachment member 35. Thus, the structure can be simplified and the manufacture can be done at an inexpensive cost.
Moreover, since the axis of the fan 31 serving as the blowing direction is set to be orthogonal to the rotation axis L of the rotor head 4, the direction of the air flow created by the fan 31 that is located between the wind turbine blades 6 across the rotation axis L can conform with a truly vertical direction from the bottom to the top.
Since the support shaft 39 of the air flow creation device 30 is arranged along the rotation axis L of the rotor head 4, the influence of fluctuations in rotation can be alleviated.

In addition, in this embodiment, the angle at which the axis of the fan 31 crosses over the rotation axis L of the rotor head 4 is set to be approximately orthogonal. However, this crossing angle may be changed from approximately orthogonal to inclined to both sides. By so doing, the direction of the air flow created by the fan 31 can be oriented toward a direction which is more necessary for the rotor head 4.

In this embodiment, the posture of the air flow creation device 30 is automatically adjusted by the weights 37; however, the posture can also be adjusted by using a drive mechanism having an appropriate structure.
By so doing, the posture of the air flow creation device 30 can be adjusted by controlling the drive mechanism along with the rotation of the cover 5 and the rotor head 4. The direction of the air flow created by the fan 31 can be oriented in a substantially fixed direction.
For example, regarding the access of air between the nacelle 3 and the cover 5, there exist optimum positions for blow-in and blow-out as seen from the nacelle 3 because the pressure from the outside is not uniform due to the asymmetrical shape of the nacelle 3 and the or the tower 2. Because this air flow direction can be set at discretion, the air flow direction created by the air flaw creation device 30 can be set to correspond to these optimum positions for blow-in and blow-out.

### Third Embodiment

Next is a description of a third embodiment of the present invention with reference to Fig. 11 to Fig. 15.
The basic configuration of the wind turbine generator 1 according to this embodiment is the same as that of the first embodiment, while the configuration of the air flow creation device is different. Thus, only the difference is described in this embodiment, and other overlapping descriptions are omitted.
The same reference signs are used for components the same as those of the first embodiment, and detailed descriptions thereof are omitted.
Fig. 11 is a schematic front view showing the configuration of the air flow creation device 40. Fig. 12 is a schematic side view showing the configuration of the air flow creation device 40. Fig. 13 to Fig. 15 are schematic front views showing the configuration of the air flow creation device 40 at each rotational position differing from that of Fig. 11.

An air flow creation device 40 of this embodiment is mounted within a space between the front end of the rotor head 4 inside the cover 5 and the front end of the cover 5, that is to say, the interior space of the cover 5.
The air flow creation device 40 is provided with a cylindrical fixed duct 41 which has a circular cross section and is fixedly attached to the interior of the cover 5, a fan 43 (blowing member) fixedly attached to the interior of the fixed duct 41, a first movable duct (1st movable duct) 45 swingably attached to one end of the fixed duct 41, and a second movable duct (2nd movable duct) 47 swingably attached to the other end of the fixed duct 41.

The fixed duct 41 is set so that its longitudinal direction can be approximately orthogonal to (cross over) the rotation axis L of the rotor head 4, and the rotation axis L can pass through an approximate center of the opening in the longitudinal direction. That is to say, the fixed duct 41 rotates about the rotation axis L along with the rotation of the cover 5 and the rotor head 4 so that its longitudinal direction can be changed throughout 360°.
The fan 43 is fixedly attached to an approximate center in the longitudinal direction of the fixed duct 41 so that an air flow can be created in one way along the longitudinal direction.

The first movable duct 45 is made cylindrical with a circular cross section, and is attached to one end of the fixed duct 41 on the downstream side in the direction of an air flow created by the fan 43 so as to form a passage to communicate with the fixed duct 41.
The first movable duct 45 has a first opening 49 on one end. The other end of the first movable duct 45 is rotatably supported by the fixed duct 41 while being communicated with the fixed duct 41.
The other end of the first movable duct 45 against the first opening 49 is attached with a first weight (1st weight) 51.
The cross sections of the fixed duct 41, the first movable duct 45, and the second movable duct 47 are not limited to the circular shape and may be formed in any shape.

The first movable duct 45 moves in the rotating direction along with the rotation of the fixed duct 41, but is rotatably supported by the fixed duct 41. Thus, even if the first movable duct 45 is moved in the rotating direction, it rotates (swings) relative to the fixed duct 41 so that the heavy first weight 51 can be always located at the bottom.
By so doing, the first opening 49 which is on the other side of the first weight 51 across the center of swing can be oriented upward at all times.

The second movable duct 47 is made cylindrical with a circular cross section, and is attached to one end of the fixed duct 41 on the upstream side in the direction of an air flow created by the fan 43 so as to form a passage to communicate with the fixed duct 41.
The second movable duct 47 has a second opening 53 on one end. The other end of the second movable duct 47 is rotatably supported by the fixed duct 41 while being communicated with the fixed duct 41.
The second opening 53 of the second movable duct 47 is attached with a plurality of, for example, two second weights (2nd weights) 55.

The second movable duct 47 is moved in the rotating direction along with the rotation of the fixed duct 41, but is rotatably supported by the fixed duct 41. Thus, even if the second movable duct 47 is moved in the rotating direction, it rotates (swings) relative to the fixed duct 41 so that the heavy second weights 55 can be always located at the bottom.
By so doing, the second opening 53 can be oriented downward at all times.

Next is a description of the operation of the wind turbine generator 1 having the above-mentioned configuration, mainly regarding the operation of the air flow creation device 40.
When the power of wind hitting against the wind turbine blades 6 from the direction of the rotation axis L of the rotor head 4 makes the rotor head 4 rotate about the rotation axis L, the wind turbine blades 6 are moved about the rotation axis L for example, clockwise in the circumferential direction. In the air flow creation device 40, since the fan 43 creates an air flow from the second movable duct 47 side to the first movable duct 45 side, the fan 43 emits air that has been intaken from the second opening 53, from the first opening 49 through the second movable duct 47, the fixed duct 41, and the first movable duct 45.

For example, as shown in Fig. 11 and Fig. 12, when the fixed duct 41 is set horizontal and the first movable duct 45 is located in a position on the left, the first movable duct 45 has the first weight 51 at the bottom, and therefore the first opening 49 is open to face upward, The second movable duct 47 has the second weights 55 at the bottom, and therefore the second opening 53 is open to face downward.
The fan 43 emits air that has been intaken from the second opening 53, from the first opening 49 through the second movable duct 47, the fixed duct 41, and the first movable duct 45, because of which the fan 43 intakes air from the downward and blows it to the upward.

When the wind turbine blade 6a rotates further clockwise, the fixed duct 41 rotates about the rotation axis L along with the rotation to be sequentially located in positions as shown in Fig. 13 to Fig. 15.
At this time, the first movable duct 45 keeps the state where the first opening 49 is always open to face upward because the first weight 51 is forced to stay downward.
In addition, the second movable duct 47 is in the state where the second opening 53 is always open to face downward because the second weights 55 are forced to stay downward.
Accordingly, although the position of the air flow creation device 40 is moved in the widthwise direction, the air flow can be created in a substantially fixed direction from the lower side to the upper side.

In this manner, since the air flow creation device 40 creates an air flow roughly from the lower side to the upper side within the cover 5, the air circulation is favorably done inside the cover 5.
By so doing, the interior of the cover 5 can be efficiently cooled down. Moreover, this makes it possible to more efficiently conduct the air circulation in corporation with the induction to the upward of air having a high temperature that has been heated as a result of cooling down the pitch driving devices 12 and the like inside the cover 5, due to the increase in the buoyancy.

In addition, since the air flow created by the air flow creation device 40 is formed to flow in a substantially fixed direction from the lower side to the upper side relative to the nacelle 3, the downstream side of the air flow conforms with the region where a flow runs from the cover 5 side to the nacelle 3 side, which is created in the upper area of the communication channel 9. The upstream side of the air flow conforms with the region where a flow runs from the nacelle 3 side to the cover 5 side, which is created in the lower area of the communication channel 9.
By so doing, it becomes possible to smoothly conduct the air circulation created between the interior of the cover 5 and the interior of the nacelle 3, and therefore the interior of the cover 5 can be more efficiently cooled down.
Since the interior of the cover 5 can be efficiently and reliably cooled down in this manner, the control devices for the pitch driving devices 12 can be normally operated to keep continue the power generation.
It becomes possible to conduct the temperature management in a suitable manner for the increase in the size of the wind turbine generator 1 by cooling down the interior of the cover 5, and thereby it becomes possible to improve the reliability and the durability of the wind turbine generator 1.

Moreover, the fixed duct 41, the first movable duct 45, and the second movable duct 47 may be modified as shown in Fig. 16 to Fig. 18, for example.
That is to say, in this modified example, the opposite ends of the fixed duct 41 are open. In positions spaced from and outside of the opposite ends of the fixed duct 41, a pair of auxiliary ducts 42 are fixedly attached to the cover 5 in a centrosymmetrical manner relative to the rotation axis L.
The opposite ends of the fixed duct 41 are provided with movable ducts 46 and 48 that are swingably attached to the fixed duct 41 in positions corresponding to the pair of auxiliary ducts 42.

The movable ducts 46 and 48 are swingably supported by the fixed duct 41 with pivot points 50 and 52 provided in positions to oppose the curved surface that defines the air flow passage.
A weight 54 is attached in a vicinity of the pivot point 50 of the movable duct 46. A weight 56 is attached on one end of the curved surface of the movable duct 48.
The movable ducts 46 and 48 swing about the fixed duct 41 along with the rotation of the fixed duct 41 so that the weights 54 and 56 can be located at the bottom.

For example, as shown in Fig. 16, when the fixed duct 41 is located so as to extend in a vertical direction, the movable ducts 46 and 48 are located in positions which do not cover the openings of the fixed duct 41. Therefore, the fan 43 creates an air flow from the lower side to the upper side through the fixed duct 41.
When the wind turbine blade 6a rotates further clockwise and the fixed duct 41 comes to the position of Fig. 17, the movable ducts 46 and 48 are moved to the opening sides of the fixed duct 41, but are still located in positions which do not cover the openings of the fixed duct 41. Therefore, the fan 43 creates an air flow from a substantially lower side to a substantially upper side through the fixed duct 41.

When the wind turbine blade 6a rotates further clockwise until the fixed duct 41 comes to the position as shown in Fig. 18 that is vertically inverted to the position of Fig. 16, the movable ducts 46 and 48 are moved to positions which cover the openings of the fixed duct 41.
The movable duct 46 forms a duct portion which guides air from the lower side to the fixed duct 41 in corporation with the auxiliary duct 42. On the other hand, the movable duct 48 forms a duct portion which guides air from the fixed duct 41 to the upper side in corporation with the auxiliary duct 42.
By so doing, even if the air flow inside the fixed duct 41 created by the fan 43 runs from the upper side to the lower side, the air flow creation device 40 is capable of creating an air flow from the lower side to the upper side. That is to say, the air flow creation device 40 according to this modified example is capable of creating an air flow in a substantially fixed direction from the lower side to the upper side relative to the nacelle 3.

### Fourth Embodiment

Next is a description of a fourth embodiment of the present invention with reference to Fig. 19 and Fig. 20.
The basic configuration of the wind turbine generator 1 according to this embodiment is the same as that of the first embodiment, while the configuration of the air flow creation device is different. Thus, only the difference is described in this embodiment, and other overlapping descriptions are omitted.
The same reference signs are used for components the same as those of the first embodiment, and detailed descriptions thereof are omitted.
Fig. 19 is a schematic side view showing the schematic configuration of an air flow creation device 60. Fig. 20 is a schematic front view showing the operation of the air flow creation device 60.

The air flow creation device 60 of this embodiment is mounted within a space between the front end of the rotor head 4 inside the cover 5 and the front end of the cover 5, that is to say, the interior space of the cover 5.
The air flow creation device 60 is provided with at least one through hole portion 61 in an approximate circular shape to pierce the lateral face of the cover 5, and an open/close member 63 for opening/closing the through hole portion 61.
The open/close member 63 comprises a lid portion 65 which is an approximately circular plate material whose opposite faces constitute a close face 65A and an open face 65B, a swingable shaft 67 which is attached inside and along the open face 65B and is rotatably supported by the cover 5, and a weight (3rd weight) attached to the open face 65B.

Since the swingable shaft 67 is attached along the open face 65B so that it runs through the center of the open face 65B, the lid portion 65 is rotatably supported by the cover 5 at positions on the open face 65B side from the center in the thickness direction.
The lid portion 65 rotates about the swingable shaft 67 so that the open face 65B or the close face 65A can face the through hole portion 61.
The lid portion 65 is configured to close the through hole portion 61 when the close face 65A comes to face the through hole portion 61.

Next is a description of the operation of the thus configured air flow creation device 60.
In the wind turbine generator 1, the wind turbine blades 6 are set to face upwind at all times, and thus the cover 5 also faces upwind. When the through hole portion 61 is opened, a wind passes therethrough and flows into the cover 5. When the through hole portion 61 is closed, no wind would pass therethrough and flow into the cover 5.
Since the through hole portion 61 is provided in a lateral face of the cover 5, the position of the through hole portion 61 is moved along the circumference as shown in Fig. 20 when the cover 5 rotates about the axis of the rotor head 4.

Since the lid portion 65 rotates so that the weight 69 can be always located at the bottom, the open face 65B is located on the lower side at all times no matter which rotational position the lid portion 65 is located at.
When the through hole portion 61 is located at, for example, the position E of Fig. 20, the open/close member 63 is located on the upper side of the cover 5. Thus, the open face 65B of the lid portion 65 located on the lower side is in a position to face the through hole portion 61.

When the through hole portion 61 passes the position F and reaches, for example, the position G, the open face 65B comes to the upper side of the close face 65A, in other words, the weight 69 comes to the upper side of the swingable shaft 67. Therefore, the lid portion 65 rotates about the swingable shaft 67 so that the weight 69 can be located at the bottom, and the close face 65A is located in a position to face the through hole portion 61 to close the through hole portion 61.
That is to say, when the through hole portion 61 is located at, for example, the position H of Fig. 20, the open/lose member 63 is located on the lower side of the cover 5. Thus, the close face 65A of the lid portion 65 located on the upper side is in a position to face the through hole portion 61.

When the through hole portion 61 passes the positions H and I and reaches, for example, the position J, the open face 65B comes to the upper side of the close face 65A, in other words, the weight 69 comes to the upper side of the swingable shaft 67. Therefore, the lid portion 65 rotates about the swingable shaft 67 so that the weight 69 can be located at the bottom, and the close face 65A comes to the upper side. By so doing, in this area, the open/close member 63 is located on the upper side of the through hole portion 61, that is, the cover 5. Thus, the open face 65B of the lid portion 65 located on the lower side is in a position to face the through hole portion 61.

When the open/lose member 63 is located on a substantially lower side of the cover 5, the open face 65B faces the through hole portion 61 to open the through hole portion 61. Therefore, an external wind passes through the through hole portion 61 and flows into the cover 5.
On the other hand, when open/close member 63 is located on a substantially upper side of the cover 5, the close face 65A faces the through hole portion 61 to close the through hole portion 61. Therefore, no external wind would pass through the through hole portion 61 to flow into the cover 5.
In this manner, since the position to open the through hole portion 61 is set to be on the lower side of the cover 5, intrusions of rainwater and such matters can be relatively reduced.

Since the through hole portion 61 is set to open in an approximately lower half area of the cover 5 and close in an approximately upper half area of the cover 5, the air flow incoming from the open position is capable of forming an air flow running roughly from the lower side to the upper side.
In this manner, since the air flow creation device 60 creates an air flow roughly from the lower side to the upper side within the cover 5, the air circulation is favorably done inside the cover 5.
By so doing, the interior of the cover 5 can be efficiently cooled down. Moreover, this makes it possible to more efficiently conduct the air circulation in corporation with the induction to the upward of air having a high temperature that has been heated as a result of cooling down the pitch driving devices 12 and the like inside the cover 5, due to the increase in the buoyancy.

Since the air flow created by the air flow creation device 60 is formed to flow in a substantially fixed direction from the lower side to the upper side relative to the nacelle 3, the downstream side of the air flow conforms with the region where a flow runs from the cover 5 side to the nacelle 3 side, which is created in the upper area of the communication channel 9. The upstream side of the air flow conforms with the region where a flow runs from the nacelle 3 side to the cover 5 side, which is created in the lower area of the communication channel 9.
By so doing, it becomes possible to smoothly conduct the air circulation created between the interior of the cover 5 and the interior of the nacelle 3, and therefore the interior of the cover 5 can be more efficiently cooled down.
Since the interior of the cover 5 can be efficiently and reliably cooled down in this manner, the control devices for the pitch driving devices 12 can be normally operated to keep continue the power generation.
It becomes possible to conduct the temperature management in a suitable manner for the increase in the size of the wind turbine generator 1 by cooling down the interior of the cover 5, and thereby it becomes possible to improve the reliability and the durability of the wind turbine generator 1.

It is also possible to provide a plurality of through hole portions 61 in the circumferential direction. By so doing, the air flow can be created in a relatively continuous fashion.

The present invention is not limited to the respective embodiments mentioned above, and modifications can be made as appropriate without departing from the gist of the present invention.

### {Reference Signs List}

- 1: wind turbine generator
- 3: nacelle
- 4: rotor head
- 5: cover
- 6: wind turbine blades
- 7: power generating facility
- 20: air flow creation device
- 21: fan
- 30: air flow creation device
- 31: fan
- 40: air flow creation device
- 41: fixed duct
- 43: fan
- 45: first movable duct
- 47: second movable duct
- 51: first weight
- 55: second weights
- 60: air flow creation device
- 61: through hole portion
- 63: open/close member
- 65: lid portion
- 65A: close face
- 65B: open face
- 69: weight
- L: rotation axis
- L6: axis

## Claims

1. A wind turbine generator comprising:
a rotor head to which wind turbine blades are attached;
a cover which covers the rotor head; and
a nacelle which accommodates a power generating facility connected to the rotor head, and
wherein an air circulation is created between the interior of the cover and the interior of the nacelle, and
wherein an air flow creation device which creates an air flow is provided inside the cover.

2. A wind turbine generator according to Claim 1, wherein the air flow creation device creates the air flow from a lower side to an upper side.

3. A wind turbine generator according to Claim 1 or 2, wherein the air flow creation device comprises a blowing member which creates an air flow in a blowing direction.

4. A wind turbine generator according to Claim 3, wherein the blowing member is fixedly attached to the interior of the cover so that the blowing direction crosses over the axis of the rotor head, and is designed to selectively create an air flow in either one of opposite directions along the blowing direction.

5. A wind turbine generator according to Claim 3, wherein the blowing member is arranged so that the blowing direction crosses over the axis of the rotor head, and is attached to the interior of the cover rotatably about a rotation axis that is approximately orthogonal to the blowing direction.

6. A wind turbine generator according to Claim 3, wherein: the air flow creation device comprises
a fixed duct which has a cylindrical shape and is fixedly attached to the interior of the cover so that its longitudinal direction crosses over the axis of the rotor head,
a blowing member fixedly attached to an approximate center in the longitudinal direction of the fixed duct so that an air flow can be created in one way along the longitudinal direction, and
a first movable duct swingably attached to one end of the fixed duct on a downstream side of the air flow so as to form an extension from the fixed duct; and
the first movable duct swings corresponding to a movement of the position of the fixed duct along with the rotation of the cover and the rotor head, and a blow-out direction of the air flow is oriented toward the downstream side in the substantially fixed direction.

7. A wind turbine generator according to Claim 6, wherein the first movable duct is attached with a first weight on the opposite side of a blow-out port of the air flow across the center of swing.

8. A wind turbine generator according to Claim 6 or 7, wherein: the air flow creation device comprises a second movable duct swingably attached to one end of the fixed duct on an upstream side of the air flow so as to form an extension from the fixed duct;
the second movable duct swings corresponding to a movement of the position of the fixed duct along with the rotation of the cover and the rotor head; and
a blow-in direction of the air flow is oriented toward the upstream side in the substantially fixed direction.

9. A wind turbine generator according to Claim 8, wherein the second movable duct is attached with a second weight on the side of a blow-in port of the air flow.

10. A wind turbine generator according to Claim 1 or 2, wherein the air flow creation device comprises
at least one through hole portion that pierces a lateral face of the cover, and
an open/close member for opening/closing the through hole portion.

11. A wind turbine generator according to Claim 10, wherein: the open/close member comprises a lid portion which is a plate material whose opposite faces constitute a close face and an open face, and which is rotatably supported by the cover at a position on the open face side from the center in the thickness direction, and a third weight attached to the open face; and
the through hole portion is closed when the face comes to face the through hole portion.
